# EUROPEAN PATENT APPLICATION

(11) **EP 4 659 969 A1**
(43) Date of publication of application: **10.12.2025**
(21) Application number: 25179869.0
(22) Date of filing: 30.05.2025
(51) Int. Cl.: B60C 9/08, B60C 9/28, B60C 11/00, B60C 11/01, B60C 15/00

(54) **REDUCED WEIGHT TIRE**

(30) Priority: 07.06.2024 US 202463657442 P
(71) Applicant: The Goodyear Tire & Rubber Company, Akron, OH 44316 (US)
(72) Inventor: UEYOKO, Kiyoshi, Copley, 44321 (US); LIU, Peijun, Hudson, Ohio, 44236 (US); DAS, Badal, Strongsville, 44136 (US); HELD, James Robert, North Canton, Ohio, 44720 (US); REITER, Leonard James, Norton, 44203 (US); ELCHERT, Alex James, Akron, 44224 (US)
(74) Representative: Kutsch, Bernd

(57) **Abstract**

A tire (100) is disclosed comprising an outer layer of rubber forming a tread (113) and a sidewall (109) and comprising a shoulder region (116) positioned between the tread and the sidewall. In a first aspect, a plurality of carcass plies (133) is disposed along a radially inward side of the tread (113), the carcass plies (133) having at least one carcass ply (133a) with a first end wrapping 270 degrees or less around a bead core (106). In a second aspect, a cushion (129) is disposed on a radially inward side of the tread (113) and a belt package (126) is disposed on a radially inward side of the cushion (129), wherein the shoulder region (116) includes a region of interest (136) disposed between or defined by a radially innermost lateral edge of the belt package (126) and a radially outermost lateral edge of the belt package (126). A first ratio between a thickness (139) of the outer layer of rubber in the region of interest (136) and a total thickness (139, 143) of rubber in the region of interest (136) is in a range of from 0.37 to 0.73 and a second ratio between the thickness (139) of the outer layer of rubber in the region of interest (136) and a thickness (149) of the cushion (129) beneath or underneath the tread (113) is in a range of from 1.4 to 3.1. In a third aspect, a cushion (129) is disposed on a radially inward side of the tread (113), a belt package (126) is disposed on a radially inward side of the cushion (129), and a region of interest (136) is disposed between the tread (113) and the sidewall (119), the region of interest (136) comprising a shoulder of the belt package (126), and a plurality of carcass plies (133) is disposed along a radially inward side of the tread (113), the plurality of carcass plies (133) having at least one carcass ply (133a) with an end wrapping 270 degrees or less around a bead core (106).

## Description

### BACKGROUND

Tires that are used, for example, by aircraft are specially designed to withstand extremely high pressures so that they do not burst upon impact. Also, aircraft tires operate under difficult conditions due to the immense weight of an aircraft, high speeds with significant acceleration and deceleration, sudden impacts upon landing, and maximum braking in emergency situations as well as other high stress situations.

### SUMMARY OF THE INVENTION

The invention relates to a tire in accordance with claim 1.

Dependent claims refer to preferred embodiments of the invention.

In a first preferred aspect of the invention, the tire comprises an outer layer of rubber forming a tread and a sidewall, a shoulder region positioned between the tread and the sidewall, and a plurality of carcass plies layered or disposed along a radially inward side of the tread, the plurality of carcass plies having at least one carcass ply (also called first carcass ply) with a first end wrapping 270 degrees or less around a bead core

In a second preferred aspect of the invention, the tire comprises an outer layer of rubber forming a tread and a sidewall, a shoulder region positioned between the tread and the sidewall, and a cushion disposed on a radially inward side of the tread and a belt package disposed on a radially inward side of the cushion, wherein the shoulder region includes a region of interest disposed between or defined by a radially innermost lateral edge of the belt package and a radially outermost lateral edge of the belt package, wherein a first ratio between a thickness of the outer layer of rubber in the region of interest and a total thickness of rubber in the region of interest is in a range of from 0.37 to 0.73, and wherein a second ratio between the thickness of the outer layer of rubber in the region of interest and a thickness of the cushion beneath the tread is in a range of from 1.4 to 3.1

In a third preferred aspect of the invention, the tire comprises an outer layer of rubber forming a tread and a sidewall, a shoulder region positioned between the tread and the sidewall, and a cushion disposed on a radially inward side of the tread and a belt package disposed on a radially inward side of the cushion, a region of interest disposed between the tread and the sidewall, the region of interest comprising a shoulder of the belt package, and a plurality of carcass plies layered along a radially inward side of the tread, the plurality of carcass plies having at least one carcass ply (also called first carcass ply) with an end wrapping 270 degrees or less around a bead core.

These aspects may be independently combined.

### BRIEF DESCRIPTION OF THE DRAWINGS

The invention can be better understood with reference to the following drawings. The components in the drawings are not necessarily to scale, with emphasis instead being placed upon clearly illustrating the principles of the disclosure. Moreover, in the drawings, like reference numerals designate corresponding parts throughout the several views.
FIG. 1 is a perspective cross-sectional view of a tire according to various examples of the invention.
FIG. 2 is a front cross-sectional view of a shoulder region of the tire shown in FIG. 1 according to various examples of the invention.
FIG. 3 is a front cross-sectional view of a bead area of the tire shown in FIG. 1 according to various examples of the invention.

### DEFINITIONS

"Axial" and "axially" mean lines or directions that are parallel to the axis of rotation of the tire.

"Axially inward" and "axially inwardly" refer to an axial direction that is toward the axial center of the tire.

"Axially outward" and "axially outwardly" refer to an axial direction that is away from the axial center of the tire.

"Bead" means that part of the tire comprising an annular tensile member wrapped by ply cords and shaped, with or without other reinforcement elements such as flippers, chippers, apexes, toe guards and chafers, to fit the design rim.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Footprint" means the contact patch or area of contact created by the tire tread with a flat surface, such as the ground, as the tire rotates or rolls.

"Inboard side" means the side of the tire nearest the vehicle when the tire is mounted on a wheel and the wheel is mounted on the vehicle.

"Innerliner" means the layer or layers of elastomer or other material that form the inside surface of a tubeless tire and that contain the inflating fluid within the tire.

"Lateral" means an axial direction.

"Lateral edges" means a line tangent to the axially outermost tread contact patch or footprint as measured under normal load and tire inflation, the lines being parallel to the equatorial centerplane.

"Outboard side" means the side of the tire farthest away from the vehicle when the tire is mounted on a wheel and the wheel is mounted on the vehicle.

"Radial" and "radially" mean lines or directions that are perpendicular to the axis of rotation of the tire.

"Radially inward" and "radially inwardly" refer to a radial direction that is toward the central axis of rotation of the tire.

"Radially outward" and "radially outwardly" refer to a radial direction that is away from the central axis of rotation of the tire.

"Tread element" or "traction element" means a rib or a block element defined by a shape having adjacent grooves.

### DETAILED DESCRIPTION OF PREFERRED EMBODIMENTS OF THE INVENTION

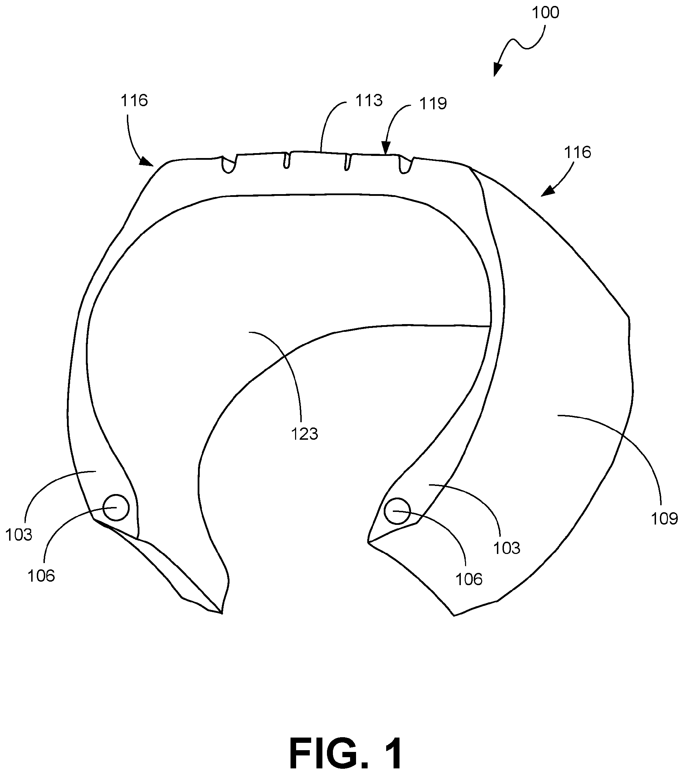

With reference to FIG. 1, shown is a cross-sectional view of a preferred embodiment of a tire 100 that may be used or is designed for an aircraft vehicle. Such a tire may however be used on other vehicles as well. The tire 100 includes a pair of bead areas 103. Embedded within the bead areas 103 is a bead core 106. An outer layer of rubber forms a pair of sidewalls 109 and a ground-contacting tread 113. Each one of the pair of sidewalls 109 extends radially outwardly from a respective bead area 103 to a ground-contacting tread 113, thereby forming a shoulder region 116 where the sidewall 109 transitions into the tread 113.

The tread 113 is preferably formed with multiple tread elements or tread blocks 119 and defines a radially outer surface of the tire 100. In some preferred examples, the outer layer of rubber that forms the tread 113 has a modulus at 100% (M100) of 3.4 megapascals (MPa) or more and/or a penetration energy of 7 Joules (J) or more. The tire 100 is reinforced by a carcass which includes the bead areas 103 and toroidally extends from one bead area 103 to the other bead area 103. An innerliner 123 is formed on the inner or inside surface of the carcass. The tire 100 can be mounted on the flange of a wheel or rim of an aircraft or other vehicle.

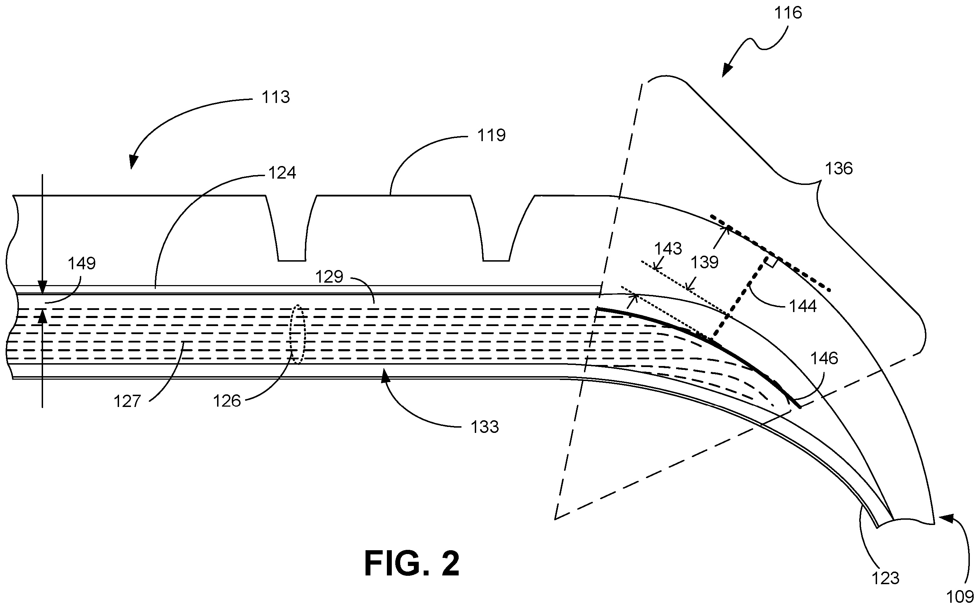

Turning now to FIG. 2, shown is a front cross-sectional view of a shoulder region 116 of the tire 100 as shown in FIG. 1. The shoulder region 116 shown in FIG. 2 is positioned between the tread 113 and a respective sidewall 109 of the tire 100. The tread 113 may include one or more reinforced tread layers 124. A belt package 126 is disposed radially under the tread 113 and preferably beneath the one or more reinforced tread layers 124 of the tread 113.

The belt package 126 includes a plurality of belts 127 (FIG. 2), each of which is wrapped in a layer of rubber and extends laterally from one shoulder region 116 to the other. A cushion 129 is disposed radially between the belt package 126 and the and the one or more reinforced tread layers 124. The cushion 129 extends laterally across the tire 100 under the tread 113 and through the shoulder region 116. The cushion 129 extends laterally beyond the ends of the belts 127 in the belt package 126. A plurality of carcass plies 133 are disposed radially between the belt package 126 and the innerliner 123. The plurality of carcass plies 133 are layered on a radially inward side of the tire 100. In some examples, the plurality of carcass plies 133 are rubber-coated fabric plies having cords which run from one bead core 106 through a first sidewall 109, laterally across the carcass of the tire 100, and through the second sidewall 109 to the other bead core 106.

Within the shoulder region 116 is a region of interest 136 which extends from where belts 127 of the belt package 126 begin to curve axially inwardly into the shoulder region 116 to where the belt package 126 terminates. Preferably, the region of interest 136 begins at a lateral end of the radially outermost belt 127 of the belt package 126 and coincides with the curvature of a lateral end portion of the belt package 126. According to one preferred example, the region of interest 136 is laterally disposed between a radially innermost lateral edge of the belt package 126 and a radially outermost lateral edge of the belt package 126. In another preferred example, the region of interest 136 follows the contour of the end of the belt package 126 within the shoulder region 116.

Various measurements can be taken in the region of interest 136. A thickness 139 of the outer layer of rubber, i.e., the rubber layer that forms the tread 113, is measured from the cushion 129 to the surface of the tire 100 in a direction normal to the surface of the tire 100 within the region of interest 136. Similarly, in some examples, a thickness 143 of the cushion 129 can be measured from an inner surface of the outer layer of rubber to the belt package 126 within the region of interest 136 in a direction normal to, or along an axis 144 that is normal to, the surface of the tire 100. The thickness 139 of the outer layer of rubber and the thickness 143 of the cushion 129 can be measured along the axis 144 which is normal to the surface of the tire 100.

In some examples, the thickness 143 of the cushion 129 is measured along the normal axis 144, from a center point of an arc 146 fit to a lateral portion of the belt package 126 in the region of interest 136. In some examples, the arc 146 fits the average curve of the belt package 126 in the region of interest 136. Because the belt package 126 can include belts 127 which are uneven in length and curvature, the arc 146 can be representative of the average edge of the belt package 126 formed by the ends of the belts 127 within the lateral portion of the belt package 126 in the region of interest 136. A total thickness of rubber in the region of interest 136 includes the thickness 139 of both the outer layer of rubber and the thickness 143 of the cushion 129 in the region of interest 136. In some examples, the thickness 143 of the cushion 129 in the region of interest 136 is different from the thickness 149 of the cushion 129 beneath the tread 113.

A first ratio can be specified between the thickness 139 of the outer layer of rubber and the total thickness of rubber. According to at least one preferred example, the first ratio between the thickness 139 of the outer layer of rubber in the region of interest 136 and the total thickness of rubber in the region of interest 136 is preferably in a range of from 0.37 to 0.73. In some examples, the first ratio is in a range of from 0.4 to 0.7, 0.45 to 0.65, 0.5 to 0.6, or other range between 0.37 to 0.73. Having a first ratio in this range allows the present tire 100 to have an improved belt edge durability and cut resistance while having a balanced landing performance. In addition, this ratio also provides for improved heat resistance while passing the Technical Standard Order C62e (TSO-C62e) standard dynamic tests issued by the Federal Aviation Administration (effective date 09/29/2006).

A second ratio can be specified between the thickness 139 of the outer layer of rubber and the thickness 149 of the cushion 129. According to at least one example, the second ratio between the thickness 139 of the outer layer of rubber in the region of interest 136 and the thickness 149 of the cushion 129 beneath the tread 113 is preferably in a range of from 1.4 to 3.1. In some preferred examples, the second ratio is in a range of from 1.5 to 3.0, 1.8 to 2.7, 2.0 to 2.3, or other range between 1.4 and 3.1. Having a second ratio in this range allows the present tire 100 to have an improved belt edge durability and cut resistance while having a balanced landing performance.

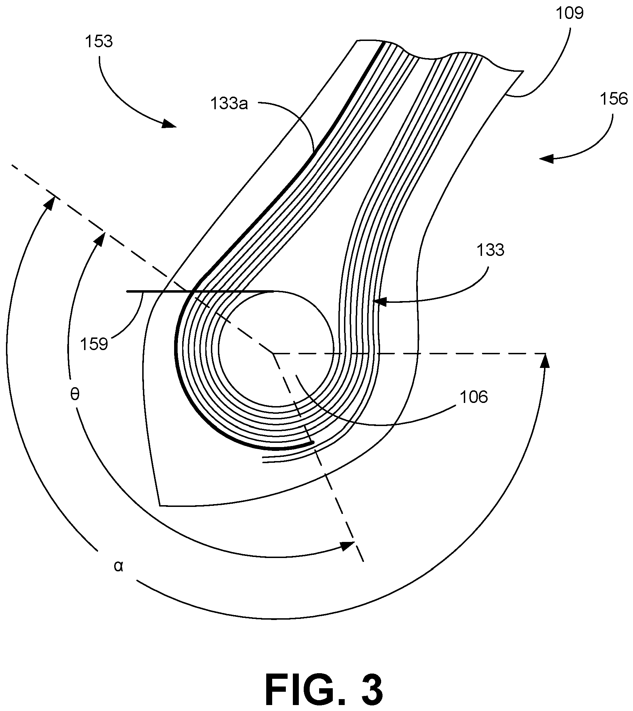

Moving next to FIG. 3, shown is a front cross-sectional view of a bead area 103 of the tire 100 as shown in FIG. 1. The bead area 103 preferably includes an outer layer of rubber surrounding a plurality of carcass plies 133 and a bead core 106. As discussed in the description of FIG. 2, the plurality of carcass plies 133 can run from one bead core 106 along the sidewalls 109 (FIG. 1) and tread 113 (FIG. 1) to the other bead core 106. In some preferred examples, one or more carcass plies of the plurality of carcass plies 133 have cords which have a diameter in a range of from 0.5 mm to 1.05 mm. The plurality of carcass plies 133 extend along an axially innermost side 153 of the side wall 109 around the exterior of the bead core 106 and then along the radially outermost side 156 of the sidewall 109. Accordingly, an axially innermost carcass ply is the ply which wraps around the bead core 106 furthest from the bead core 106 relative to the other carcass plies 133. In some preferred examples, at least one carcass ply 133a wraps partially around the bead core 106. In some preferred examples, the at least one carcass ply 133a is the axially innermost carcass ply as shown in FIG. 3.

According to at least one preferred example, at least one carcass ply 133a wraps 270 degrees or less around a bead core 106. In some preferred examples, one or more carcass plies 133a wrap 270 degrees or less around the bead core 106. The carcass ply 133a can wrap at an angle (θ) of 270 degrees or less around the bead core 106 starting from a line 159 tangent to the top of the bead core 106 and wrapping around the bead core 106 toward the radially outermost side 156 of the sidewall 109. The angle (θ) is referred to as the wrapping angle, or a measurement of the degree at which an individual carcass ply 133a wraps around the bead core 106. An example of the wrapping angle θ is shown in FIG. 3.

Following the approximately circular shape of the bead core 106, the amount of wrapping of the carcass ply 133a can be measured by the angle (α) from the end of the carcass ply 133a to the intersection of the carcass ply 133a with a line tangent to the top of the bead core 106. In some examples, the at least one carcass ply 133a wraps around the bead core at an angle θ, which is less than the angle α. In some preferred examples, the angle θ is in a range of from 45 to 90, 90 to 180, or 180 to 270 degrees. Reducing the wrapping angle in one or more of the carcass plies 133 can reduce overall weight of the tire 100 while maintaining the integrity of the bead area 103.

## Claims

1. A tire comprising an outer layer of rubber forming a tread (113) and a sidewall (109), a shoulder region (116) positioned between the tread (113) and the sidewall (109), and
(i) a plurality of carcass plies (133) layered or disposed along a radially inward side of the tread (113), the plurality of carcass plies (133) having at least one carcass ply (133a) or a first carcass ply (133a) with a first end wrapping 270 degrees or less around a bead core (106); and/or
(ii) a cushion (129) disposed on a radially inward side of the tread (113) and a belt package (126) disposed on a radially inward side of the cushion (129), wherein the shoulder region (116) includes a region of interest (136) disposed between or defined by a radially innermost lateral edge of the belt package (126) and a radially outermost lateral edge of the belt package (126), wherein a first ratio between a thickness (139) of the outer layer of rubber in the region of interest (136) and a total thickness (139, 143) of rubber in the region of interest (136) is in a range of from 0.37 to 0.73, and wherein a second ratio between the thickness (139) of the outer layer of rubber in the region of interest (136) and a thickness (149) of the cushion (129) beneath or underneath the tread (113) is in a range of from 1.4 to 3.1; and/or
(iii) a cushion (129) disposed on a radially inward side of the tread (113) and a belt package (126) disposed on a radially inward side of the cushion (129), a region of interest (136) disposed between the tread (113) and the sidewall (119), the region of interest (136) comprising a shoulder of the belt package (126), and a plurality of carcass plies (133) layered or disposed along a radially inward side of the tread (113), the plurality of carcass plies (133) having at least one carcass ply (133a) or a first carcass ply (133a) with an end wrapping 270 degrees or less around a bead core (106).

2. The tire of claim 1, wherein the total thickness of rubber comprises the thickness of both the outer layer of rubber in the region of interest (136) and the thickness of the cushion (129) in the region of interest (136).

3. The tire of claim 1 or 2, wherein the thickness of the outer layer of rubber and the total thickness of rubber are measured along a line normal to a surface of the tire (100) in the region of interest (136) and between a center point of an arc fit (146) to at least one lateral portion of the belt package (126) in the region of interest (136) and the surface of the tire (100) in the region of interest (136).

4. The tire of at least one of the previous claims, wherein the outer layer of rubber has a modulus at 100% (M100) of 3.4 MPa or more and/or a penetration energy of 7 J or more.

5. The tire of at least one of the previous claims, wherein one or more carcass plies (133) of the plurality of carcass plies (133) comprises cords which have a diameter in the range of from 0.5 mm to 1.05 mm.

6. The tire of at least one of the previous claims, wherein the at least one or the first carcass ply (133a) wraps around the bead core (106) in the range of from 45 to 90, 90 to 180, or 180 to 270 degrees.

7. The tire of at least one of the previous claims, wherein the at least one or the first carcass ply (133a) is an axially innermost carcass ply.

8. The tire of at least one of the previous claims, wherein a first ratio between a thickness of the outer layer of rubber in the region of interest (136) and a total thickness of rubber in the region of interest (136) is in a range of from 0.37 to 0.73.

9. The tire of at least one of the previous claims, wherein a second ratio between a thickness of the outer layer of rubber in the region of interest (136) and a thickness of the cushion (129) beneath or underneath the tread (113) is in a range of from 1.4 to 3.1.

10. The tire of at least one of the previous claims, wherein the first ratio between a thickness of the outer layer of rubber in the region of interest (136) and the total thickness of rubber in the region of interest (136) is in a range of from 0.4 to 0.7, 0.45 to 0.65, or 0.5 to 0.6.

11. The tire of at least one of the previous claims, wherein the second ratio between the thickness of the outer layer of rubber in the region of interest (136) and the thickness of the cushion (129) beneath or underneath the tread (113) is in a range of from 1.5 to 3.0, 1.8 to 2.7, or 2.0 to 2.3.

12. The tire of at least one of the previous claims, wherein the tire (100) is an aircraft tire.
